# DEMANDE DE BREVET EUROPEEN

(11) **EP 0 924 582 A1**
(43) Date de publication de la demande: **23.06.1999**
(21) Numéro de dépôt: 98403091.6
(22) Date de dépôt: 08.12.1998
(51) Int. Cl.: G05B 19/042, G05B 19/05

(54) **Interface d'entrée/sortie et dispositif d'interfaçage équipé de telles interfaces**

(30) Priorité: 15.12.1997 FR 9715886
(71) Demandeur: AUTOMOBILES PEUGEOT, 75116 Paris (FR); AUTOMOBILES CITROEN, 92200 Neuilly-sur-Seine (FR)
(72) Inventeur: Martin, Jean-Julien, 42100 Saint-Etienne (FR)
(74) Mandataire: Moncheny, Michel

(57) **Abrégé**

Cette interface d'entrée/sortie comprend des entrées (42) de raccordement à au moins un premier dispositif et des sorties (44) de raccordement à au moins un deuxième dispositif. Elle comporte des moyens (50) de configuration de voies de transmission de signaux électriques entre les entrées (42) et les sorties (44) de l'interface, pour l'adaptation des entrées et/ou des sorties à la nature des dispositifs entre lesquels l'interface est destinée à être raccordée.

## Description

La présente invention se rapporte à une interface d'entrée/sortie, du type comprenant des entrées de raccordement à au moins un premier dispositif et des sorties de raccordement à au moins un deuxième dispositif, et à un dispositif d'interfaçage équipé de telles interfaces.

Elle se rapporte en particulier à une interface d'entrée/sortie assurant un dialogue d'une part entre des organes fonctionnels externes, tels que des capteurs, et un automate de pilotage du fonctionnement d'appareils électriques sous le contrôle de ces organes fonctionnels externes et, d'autre part, entre l'automate et les appareils électriques en vue du pilotage de leur fonctionnement.

Dans l'état de la technique, les interfaces de ce type sont constituées par des cartes électroniques dont les entrées et les sorties comportent une configuration figée et hétérogène d'un fabricant à l'autre.

Ainsi, en fonction du type de dispositifs entre lesquels elles sont destinées à être raccordées, des moyens de câblage externe doivent être prévus pour l'adaptation des entrées et/ou des sorties à la nature de ces dispositifs, ce qui tend à augmenter l'encombrement des moyens mis en oeuvre pour assurer la fonction d'interfaçage.

Le but de l'invention est de pallier cet inconvénient.

Elle a donc pour objet une interface d'entrée/sortie du type précité, caractérisée en ce qu'elle comporte des moyens de configuration de voies de transmission de signaux électriques entre les entrées et les sorties de l'interface, pour l'adaptation des entrées et/ou des sorties à la nature des dispositifs entre lesquels l'interface est destinée à être raccordée.

L'interface d'entrée/sortie selon l'invention peut en outre comporter une ou plusieurs des caractéristiques suivantes :
- les entrées et/ou les sorties comportent des broches primaires de raccordement et des broches secondaires de raccordement, les moyens de configuration comportant un élément de commutation interposé entre d'une part au moins une desdites broches secondaires de raccordement, et, d'autre part, des voies de transmission de données s'étendant entre les entrées et les sorties, et des voies de transmission de tension d'alimentation, l'élément de commutation assurant sélectivement la mise en communication des broches secondaires soit avec les voies de transmission de données, soit avec les voies de transmission de tension d'alimentation ;
- ledit au moins un premier dispositif comporte un ensemble d'organes fonctionnels externes et ledit au moins un deuxième dispositif comporte un automate de pilotage du fonctionnement d'appareils électriques sous le contrôle des organes fonctionnels externes ;
- en variante, ledit au moins un premier dispositif comporte un automate de pilotage du fonctionnement d'appareils électriques et ledit au moins un deuxième dispositif comporte lesdits appareils électriques;
- l'interface comporte un ensemble de modules de puissance intercalés entre les entrées et les sorties, et des moyens de sélection de modes d'alimentation d'au moins un des modules de puissance selon un premier mode d'alimentation par voie externe dans lequel lesdits au moins un module de puissance communiquent avec une broche complémentaire sur laquelle est appliquée une tension d'alimentation et un deuxième mode d'alimentation par voie interne dans lequel ils communiquent avec un bus interne d'alimentation ;
- les moyens de sélection de mode d'alimentation comportent au moins un deuxième élément de commutation interposé entre les broches complémentaires et lesdits au moins un module de puissance, et commutable à la fermeture pour l'alimentation de ces derniers selon le premier mode d'alimentation et à l'ouverture pour leur alimentation selon le deuxième mode d'alimentation ;
- les moyens de sélection de mode d'alimentation comportent en outre un organe de sélection de tensions d'alimentation desdits au moins un module de puissance, comprenant un ensemble de premiers conducteurs connectés entre le deuxième élément de commutation et les modules de puissance et un ensemble de deuxièmes conducteurs raccordés à des premières lignes d'alimentation du bus interne d'alimentation véhiculant des tensions internes d'alimentation à niveau haut, et adaptés pour être sélectivement raccordés à chaque premier conducteur de l'organe de sélection en vue de la sélection d'une des lignes d'alimentation pour l'alimentation interne des modules de puissance ;
- l'interface comporte un deuxième organe de sélection de tensions d'alimentation comportant un ensemble de premiers conducteurs raccordés aux voies de transmission de tension d'alimentation et un ensemble de deuxièmes conducteurs raccordés à des deuxièmes lignes d'alimentation du bus interne d'alimentation véhiculant des tensions d'alimentation à niveau bas et adaptés pour être sélectivement raccordés à chaque premier conducteur du deuxième organe de sélection en vue de leur mise en communication avec les broches secondaires de raccordement, par l'intermédiaire du premier élément de commutation, le deuxième élément de commutation étant interposé entre les zones de connexion des premier et deuxième organes de sélection ;
- l'interface comporte en outre un ensemble de diodes électroluminescentes disposées sur chaque voie de transmission de données ; et
- l'interface comporte en outre, disposé en sortie de chaque module de puissance, un fusible de protection des appareils électriques.

L'invention a également pour objet un dispositif d'interfaçage pour la mise en communication d'un dispositif de commande avec un ensemble d'appareils électriques et un ensemble d'organes fonctionnels externes en vue du pilotage du fonctionnement des appareils sous le contrôle des organes fonctionnels, caractérisé en ce qu'il comporte un ensemble d'interfaces d'entrée/sortie telles que définies ci-dessus.

Selon une caractéristique avantageuse, ce dispositif d'interfaçage comporte des moyens de conversion série/parallèle et/ou comporte des moyens de conversion parallèle/série interposés entre chaque interface d'entrée/sortie et le dispositif de commande.

D'autres caractéristiques et avantages ressortiront de la description suivante, donnée uniquement à titre d'exemple, et faite en référence aux dessins annexés sur lesquels :
- la figure 1 est une vue générale schématique d'un dispositif d'interfaçage incorporant une pluralité d'interfaces d'entrée/sortie suivant l'invention ;
- la figure 2 illustre de façon schématique la structure interne d'un premier type d'interface d'entrée/sortie de la figure 1 ;
- la figure 3 illustre la structure interne de l'interface de la figure 2 selon une autre configuration ;
- la figure 4 illustre de façon schématique la structure interne d'un deuxième type d'interface d'entrée/sortie de la figure 1 ; et
- la figure 5 illustre la structure interne de l'interface de la figure 4, selon une autre configuration.

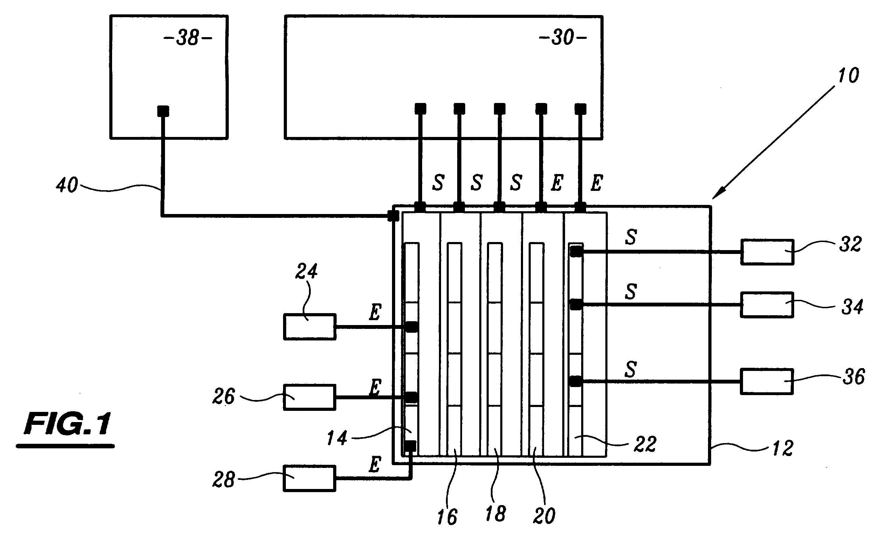

En référence à la figure 1, le dispositif d'interfaçage, désigné par la référence numérique générale 10, comporte une carte mère 12 sur laquelle sont implantées un ensemble d'interfaces d'entrée/sortie 14,16,18,20 et 22 assurant chacune un transfert d'informations numériques entre un ou plusieurs premiers dispositifs et un ou plusieurs deuxièmes dispositifs.

Dans la description qui va suivre les termes "entrée" et "sortie" désignent des entrée et sortie de signaux en considérant le cheminement des signaux par rapport à la carte 12.

Plus particulièrement, le dispositif d'interfaçage 10 comporte un premier type d'interfaces d'entrée/sortie, constituées par les interfaces 14,16 et 18 comprenant chacune des entrées E de raccordement à des organes fonctionnels externes désignés par les références numériques 24,26 et 28, par exemple des capteurs, et des sorties S de raccordement à un dispositif 30 de commande, par exemple un automate assurant le pilotage du fonctionnement d'appareils électriques 32,34 et 36, par exemple des actionneurs, des contacteurs, des relais, des électrovannes,...

Ce premier type d'interface est généralement connu sous l'appellation "carte d'entrée", en considérant le cheminement des signaux par rapport au dispositif de commande 30.

Il comporte un deuxième type d'interfaces d'entrée/sortie, constituées par les interfaces 20 et 22 comportant chacune des entrées E de raccordement au dispositif 30 et des sorties S de raccordement aux appareils électriques 32,34 et 36 en vue du pilotage de leur fonctionnement.

Ce dernier type d'interface est également connu sous l'appellation "carte de sortie" en considérant le cheminement des signaux par rapport au dispositif de commande 30.

Le dispositif d'interfaçage 10 permet ainsi d'une part de recevoir en entrée des signaux de données délivrées par les organes fonctionnels externes 24,26 et 28, et de fournir ces données au dispositif de commande 30, et, d'autre part, de recevoir en entrée des signaux de commande délivrés par ce dernier et de fournir en sortie des signaux de pilotage du fonctionnement des appareils électriques 32,34 et 36.

On voit en outre sur la figure 1 qu'une source de tension d'alimentation 38 est raccordée au dispositif 10 au moyen d'un bus d'alimentation 40 en vue de son alimentation en énergie électrique.

On notera que les organes fonctionnels, les appareils électriques, le dispositif de commande et de pilotage et la source d'alimentation sont des éléments de type classique. Ils ne seront donc pas décrits en détail par la suite.

Dans l'exemple représenté sur la figure 1, le dispositif d'interfaçage est équipé de trois interfaces du premier type et de deux interfaces du deuxième type. On conçoit toutefois qu'il peut être équipé d'un nombre quelconque de telles interfaces.

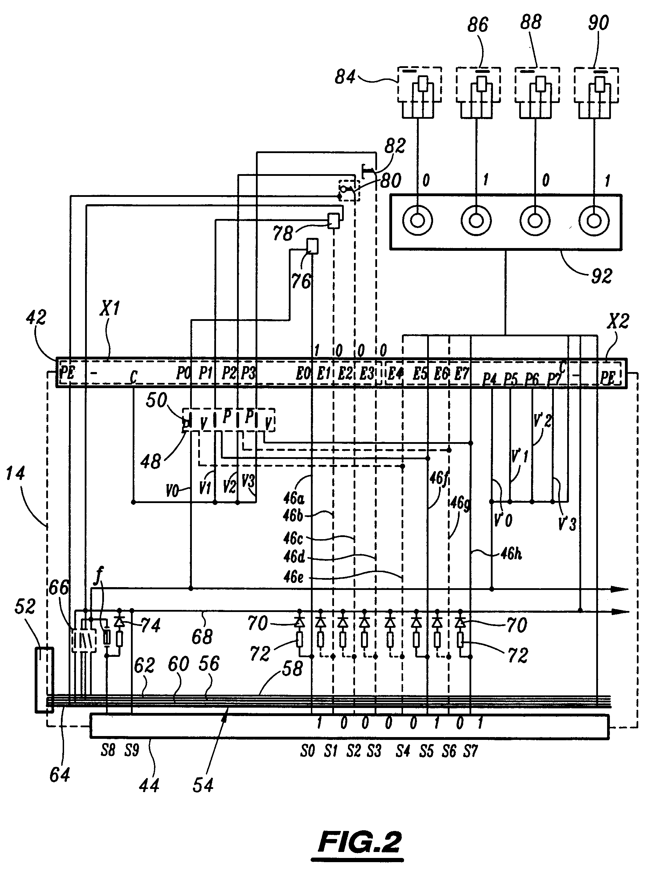

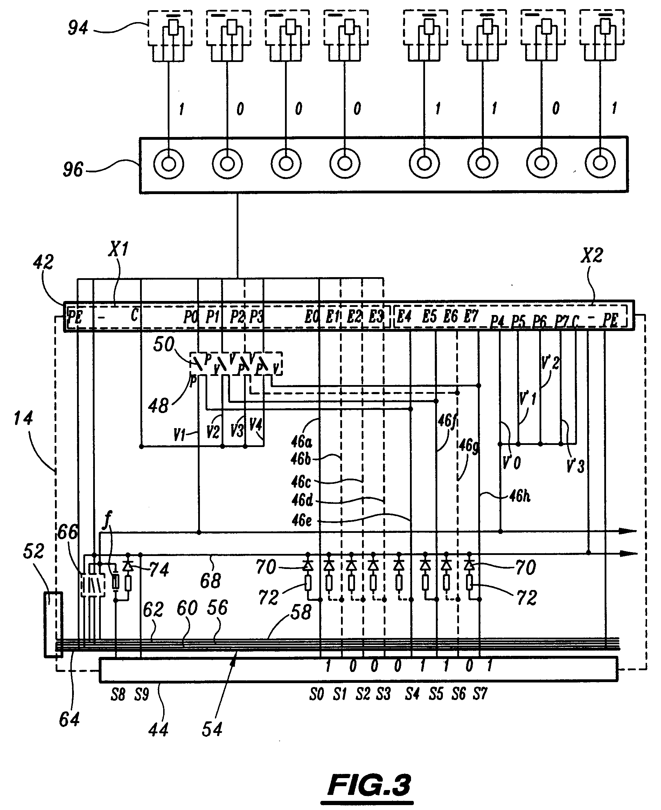

La description de la structure interne d'une interface d'entrée/sortie du premier type, telle que 14, va maintenant être faite en référence aux figures 2 et 3.

Ce type d'interface présente une structure modulaire, constituée par l'association de modules disposés en parallèle et dont le nombre dépend du nombre d'entrées et de sorties désirées.

Sur les figures 2 et 3, on a représenté un module élémentaire comportant un bornier d'entrée 42 et un bornier de sortie 44 équipés chacun de broches de raccordement électrique, respectivement aux organes fonctionnels externes et au dispositif de commande.

Les entrées sont formées par un ensemble de broches primaires de raccordement, E0 à E7, en un nombre égal à une puissance de deux, par exemple égal à 8, et un ensemble de broches secondaires de raccordement,P0 à P7.

Les sorties sont également formées par des broches de raccordement au dispositif 30, S0 à S7, et S8 et S9, ces dernières broches S8 et S9 assurant l'alimentation de l'électronique de la carte d'entrée du dispositif 30.

Des voies de transmission de signaux numériques véhiculant des données de commande 46-a à 46-h s'étendent entre les broches primaires de raccordement E0 à E7 et les broches de raccordement S0 à S7 en vue de la transmission de signaux de données de contrôle des organes fonctionnels externes 24,26 et 28 vers le dispositif de pilotage 30 (figure 1). Ces voies sont constituées par l'association en parallèle de deux groupes de voies de transmission, respectivement 46-a à 46-d et 46-e à 46-h.

Avantageusement, ces signaux de contrôle peuvent être envoyés vers le dispositif de pilotage sous une forme série en utilisant un circuit convertisseur parallèle/série raccordé en sortie du bornier de sortie 44.

En outre, l'interface d'entrée/sortie est munie de moyens de configuration des voies de transmission 46-a à 46-h en vue d'adapter les entrées à la nature des organes fonctionnels externes auxquels elles sont raccordées, et en particulier de leur mode de raccordement.

Ces moyens de configuration comportent un élément de commutation 48 interposé d'une part entre un premier groupe de broches secondaires de raccordement P0 à P3 et, d'autre part, le deuxième groupe 46-e à 46-h de voies de transmission de données, et des voies de transmission de tensions d'alimentation V0,V1,V2 et V3.

L'élément de commutation 48 comporte un ensemble de commutateurs, tels que 50, assurant chacun la commutation sélective d'une broche secondaire P0 à P3 soit avec une voie de transmission de données 46-e à 46-h soit avec l'une des voies de transmission de tension d'alimentation V0,V1,V2 et V3.

On notera que sur ces figures les voies de transmission de signaux représentées en trait plein sont des voies sous tension, les voies représentées en trait mixte sont hors tension, et les voies représentées en trait gras sont des voies sous tension transmettant un signal de puissance.

Par ailleurs, on voit sur ces figures 2 et 3 que l'interface d'entrée/sortie comporte un connecteur 52 de raccordement à la source de tension d'alimentation 38, auquel est raccordé un bus interne 54 d'alimentation comportant un ensemble de deux lignes d'alimentation 56 et 58 à niveau haut et un ensemble de deux lignes d'alimentation 60 et 62 à niveau bas. Ces lignes véhiculent par exemple deux tensions d'alimentation à 24 V et deux tensions d'alimentation à 0 V, ainsi qu'une ligne de mise à la terre 64 directement connectée à des broches secondaires PE de raccordement à la terre prévues dans le bornier 42.

Un deuxième élément de commutation 66 assure la sélection des lignes d'alimentation à niveau haut et à niveau bas.

Dans l'exemple représenté sur ces figures, dans lequel quatre niveaux de tension haut et bas sont distribués par le bus interne 54 d'alimentation, l'interface comporte un commutateur 66 à quatre voies.

Deux voies assurent sélectivement la communication d'un conducteur interne 68 d'alimentation à un niveau bas de tension avec les lignes d'alimentation interne véhiculant l'une des tensions à niveau bas, pour le raccordement électrique de diodes électroluminescentes, telles que 70, raccordées à chaque voie 46-a à 46-h de transmission de données, par l'intermédiaire d'une résistance de protection 72, en vue de signaler la présence d'un signal de données sur cette voie, et pour délivrer sur le bornier d'entrée 42 un signal d'alimentation à niveau bas fourni sur des broches "-" secondaires d'alimentation à niveau bas.

Deux autres voies de commutation assurent sélectivement la mise en communication des lignes d'alimentation internes véhiculant une tension à niveau haut, d'une part avec le bornier 44 de sortie par l'intermédiaire d'un fusible f de protection associé à une diode électroluminescente 74 de signalisation de la présence d'une tension à ses bornes, et d'autre part, avec les voies de transmission de tension d'alimentation V0,V1,V2 et V3, avec des voies de transmission de tension additionnelles V'0,V'1,V'2 et V'3 et avec des broches secondaires C de raccordement des organes fonctionnels en mode commun.

Comme mentionné précédemment, cette interface d'entrée/sortie assure la mise en communication d'organes fonctionnels externes avec le dispositif de commande et de pilotage d'appareils électriques.

Sur ces figures huit organes fonctionnels externes raccordés au bornier 42 d'entrée délivrent un mot de 8 bits constituant un octet de contrôle destiné à être transmis dispositif de pilotage 30 (figure 1).

On notera que cet octet constitue la moitié de la capacité de l'interface en signaux transmis vers le dispositif de pilotage 30, le module représenté sur les figures 2 et 3 étant complété par un module complémentaire d'entrée/sortie, non représenté sur cette figure et comportant une structure similaire.

Bien entendu, la représentation selon un format 8 bits ou 2x8 bits ne constitue qu'un exemple de réalisation, l'objet de l'invention étant indépendant du nombre de bits représentés sur les figures 2 à 5.

On voit sur la figure 2 que, par exemple, ces organes fonctionnels comportent quatre premiers organes fonctionnels externes, à savoir deux détecteurs de proximité, respectivement 76 et 78, un interrupteur 80 et un bouton-poussoir 82 connectés à quatre broches principales E0 à E3 de raccordement, et quatre autres détecteurs de proximité, 84,86, 88 et 90 raccordés en mode commun au bornier 42 par l'intermédiaire d'un répartiteur 92, lui-même alimenté par une broche C de raccordement en mode commun, une borne "-" d'alimentation en tension à niveau bas et par une broche de raccordement à la terre PE, les signaux délivrés par ces détecteurs étant transmis par les broches primaires de raccordement E4 à E7.

Comme on le voit sur cette figure 2, selon cette configuration, les commutateurs 50 de l'élément de commutation 48 sont positionnés dans une première position "p" dans laquelle les broches secondaires de raccordement électriques P0 à P3 du premier groupe sont en communication avec les voies V0,V1, V2 et V3 d'alimentation, ce qui permet d'alimenter le premier groupe d'organes fonctionnels 76,78,80 et 82.

On notera que dans cet exemple, seuls les organes fonctionnels 76,86 et 90 sont actifs, les autres étant inactifs. On obtient donc en entrée un octet constitué par le mot suivant "1 0 0 0 0 1 0 1" transmis vers la sortie en direction de l'organe de commande et de pilotage 30.

Dans la configuration représentée sur la figure 3, les organes fonctionnels externes sont constitués chacun par un détecteur de proximité, tel que 94, raccordé en mode commun, par l'intermédiaire d'un répartiteur 96, au bornier d'entrée 42.

Selon cette configuration, les détecteurs 94 sont alimentés par la broche C de raccordement en mode commun et la borne "-" d'alimentation en tension à niveau bas, ainsi que par la broche de raccordement à la terre PE, sous le contrôle du deuxième élément de commutation 66.

Les commutateurs 50 du premier élément de commutation 48 sont positionnés dans une deuxième position V pour aiguiller les signaux présents en entrée des broches secondaires de raccordement vers le deuxième groupe de voies 46-e à 46-h de transmission de signaux. Cette configuration permet de raccorder jusqu'à huit entrées issues de répartiteurs sur l'un des connecteurs X1 ou X2 portant les broches de raccordement E0 à E3 et E4 à E7, la répartition des entrées sur ces dernières étant déterminée sous le contrôle du commutateur 48.

On obtient donc en sortie un mot constitué par l'association de bits dont la valeur correspond à la sortie de chaque détecteur 94 correspondant fournie sur les broches de raccordement P0 à P3 et E0 à E3.

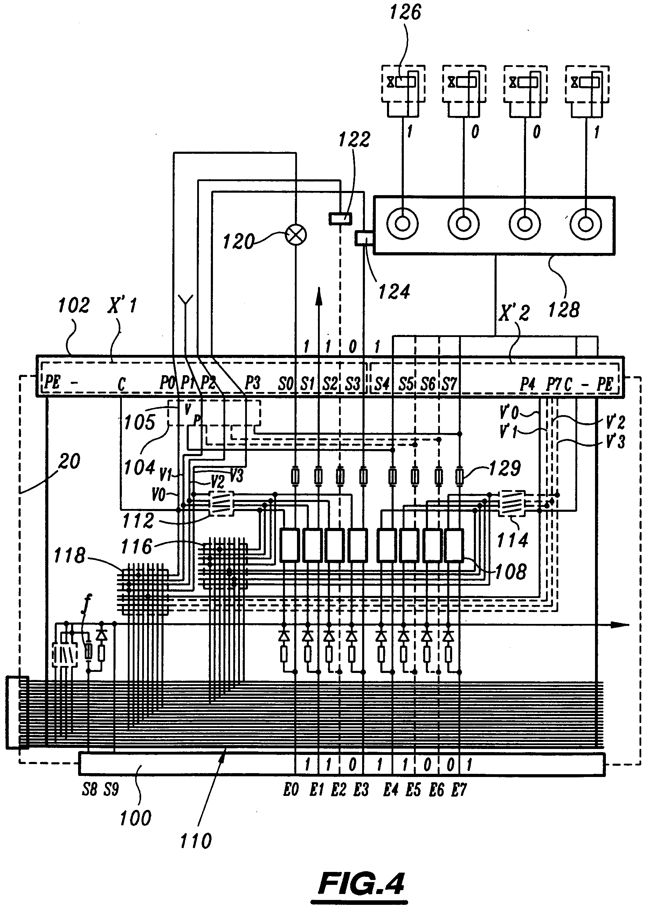

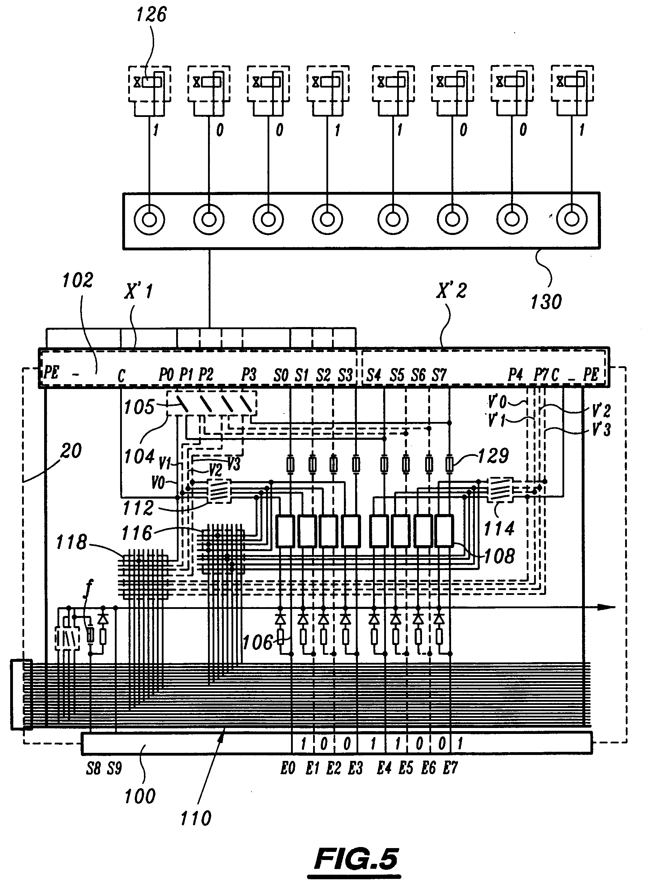

La description du deuxième type d'interface d'entrée/sortie, telle que 20, va maintenant être faite en référence aux figures 4 et 5.

Comme mentionné précédemment en référence à la figure 1, ce type d'interface assure la mise en communication du dispositif de pilotage 30 avec les appareils électriques externes en vue de leur pilotage, sous le contrôle des signaux délivrés par les interfaces du premier type décrit précédemment en référence aux figures 2 et 3.

Comme on le voit sur ces figures 4 et 5, la structure interne de ce type d'interface est similaire à celle des interfaces du premier type. Elle comporte également une structure modulaire, un seul module élémentaire permettant la transmission d'un octet étant représenté sur ces figures.

En particulier, elle comporte également des entrées E0 à E7 formées par un bornier 100 de raccordement au dispositif de pilotage 30 et des sorties formées par un bornier 102 de raccordement comprenant des broches primaires de raccordement S0 à S7 comportant deux groupes de broches primaires, S0 à S3 et S4 à S7, portées respectivement par deux connecteurs X'1 et X'2 et des broches secondaires de raccordement, P0 à P7, comportant deux groupes de broches secondaires, à savoir un premier groupe P0 à P3 porté par le premier connecteur X'1 et un deuxième groupe, P4 à P7, porté par le deuxième connecteur X'2. Elle comporte en outre un élément de commutation 104 assurant sélectivement la mise en communication des broches secondaires de raccordement du premier groupe soit avec des voies V0,V1,V2 et V3 d'alimentation, soit avec les broches primaires du deuxième groupe S4 à S7, respectivement en position P et en position V des commutateurs 105.

Cette configuration permet de raccorder jusqu'à huit sorties issues de répartiteurs sur les connecteurs X'1 et X'2. La répartition des sorties sur ces derniers étant déterminée par la position des commutateurs 105.

On notera toutefois que ce deuxième type d'interface diffère du premier type d'interface en ce qu'il est équipé de modules de puissance, tels que 108, intercalés entre les broches d'entrée et les broches primaires de sortie S0,...,S3 et des moyens de sélection de modes d'alimentation d'un ou de plusieurs de ces modules de puissance soit selon un premier mode d'alimentation par voie externe, dans lequel les modules de puissance communiquent avec une broche secondaire P0,...,P3 sur laquelle est appliquée une tension d'alimentation et un deuxième mode d'alimentation par voie interne dans lequel il ou ils communiquent avec un bus interne d'alimentation 110.

On voit sur ces figures que les moyens de sélection de modes d'alimentation comportent deux éléments de commutation, respectivement 112 et 114, interposés l'un, 112, entre l'élément de commutation 104 et un premier groupe de modules de puissance 108 et l'autre, 114, entre les broches secondaires de raccordement du deuxième groupe et un deuxième groupe de modules de puissance, ces éléments de commutation 112 et 114 étant commutables à la fermeture pour l'alimentation des modules de puissance selon le premier mode d'alimentation et à l'ouverture pour l'alimentation des ces derniers selon le deuxième mode d'alimentation.

Par ailleurs, l'interface comporte deux organes de sélection de tensions d'alimentation, 116 et 118, constitués selon ce mode de réalisation par des matrices de sélection, et comportant chacun un ensemble de premiers conducteurs et un ensemble de deuxièmes conducteurs adaptés pour être sélectivement raccordés à chaque premier conducteur pour la sélection de tension d'alimentation.

La première matrice de sélection 116 comporte un ensemble de lignes connectées, les unes, entre l'élément de commutation 112 de sélection de modes d'alimentation et un premier groupe de modules de puissance 108 et, les autres, entre le deuxième élément de commutation 114 et le deuxième groupe de modules de puissance 108, et un ensemble de colonnes raccordées à des lignes d'alimentation du bus interne 110 véhiculant des tensions internes d'alimentation à niveau haut, en vue du raccordement sélectif des modules de puissance à ces dernières pour leur alimentation.

Comme on le conçoit, ces lignes et colonnes sont susceptibles d'être sélectivement connectées les unes aux autres à l'aide de plots de raccordement en vue de la sélection d'une des lignes d'alimentation pour l'alimentation interne de chaque module de puissance.

La deuxième matrice de sélection 118 comporte également un ensemble de premiers conducteurs sous forme de lignes raccordées les unes aux voies V0 à V3 de transmission de tension d'alimentation et les autres aux broches secondaires de raccordement du deuxième groupe, P4 à P7, et un ensemble de deuxièmes conducteurs sous forme de colonnes raccordées à des lignes d'alimentation du bus 110 véhiculant des tensions internes d'alimentation à niveau bas, ces lignes et colonnes étant également susceptibles d'être sélectivement connectée à l'aide de plots de raccordement en vue de la mise en communication des broches secondaires de raccordement, le cas échéant par l'intermédiaire de l'élément de commutation 104 pour les broches du premier groupe, avec les lignes d'alimentation véhiculant des tensions à niveau bas.

Dans la configuration représentée sur la figure 4, un premier groupe d'appareils électriques, constitués par exemple par un voyant lumineux 120, un contacteur 122 et un relais 124, est raccordé d'une part au premier groupe de broches primaires de raccordement S0 à S3, et au premier groupe de broches de raccordement secondaires P0 à P3 en vue de leur pilotage sous l'action du dispositif de pilotage.

De même, un deuxième groupe d'appareils électriques, tels que 126, constitués chacun par exemple par une électrovanne, est raccordé par l'intermédiaire d'un répartiteur 128 au deuxième groupe de broches primaires de raccordement S4 à S7, et aux broches de raccordement secondaires qui leur sont associées.

Les modules de puissance 108 correspondant au deuxième groupe d'appareils électriques 126 sont connectés aux circuits d'alimentation du bus interne véhiculant des niveaux de tension haut, par l'intermédiaire du premier organe de sélection 116 et fonctionnent dès lors selon un mode d'alimentation par voie interne, sous le contrôle du dispositif 30.

Selon cette configuration les signaux de pilotage du deuxième groupe d'appareils 126 sont directement transférés vers les broches primaires de raccordement du deuxième groupe S4 à S7. Dans ce cas, les commutateurs de l'élément de commutation 104 sont réglés dans la position P.

Par ailleurs, les modules de puissance 108 d'alimentation des appareils électrique 120,122 et 124 sont également alimentés par voies internes au moyen du premier organe de sélection 116. Dans ce cas, les voies d'alimentation V0,V2 et V3 sont déconnectées de ces modules 108 au moyen du sélecteur 112.

On voit sur cette figure 4 qu'une des broches, P1, du premier groupe de broches principales de raccordement fournit un contact du type "libre potentiel". Selon ce mode de raccordement, le module de puissance correspondant est alimenté par voie externe, par l'intermédiaire des éléments de commutation 105 et 112, et on notera que, dans ce cas, les organes de sélection 116 et 118 ne comportent aucun plot de raccordement avec le bus d'alimentation 110.

Les appareils 120,122 et 124 sont en outre alimentés par une tension à niveau bas par l'intermédiaire du deuxième organe de sélection 118, le premier élément de commutation 112 étant commuté de façon appropriée.

On notera que des fusibles de protection des broches principales, tels que 129, sont intercalés entre chaque module de puissance et chaque broche principale de raccordement S0 à S7.

En référence à la figure 5, on voit que huit appareils électriques, tels que 126, sont raccordés aux sorties de l'interface par l'intermédiaire d'un répartiteur 130.

Selon cette configuration, tous les modules de puissance 108 sont alimentés par voie interne au moyen du premier organe de selection 116, l'élément de commutation 112 correspondant de sélection du mode d'alimentation étant positionné de manière à déconnecter l'élément de commutation 104 des modules de puissance.

En outre, cet élément de commutation 104 est réglé dans la position V de manière à aiguiller les signaux de données des broches d'entrée E4 à E7 du deuxième groupe vers les broches secondaires P0 à P3 de raccordement du premier groupe.

On notera que, comme pour l'interface du premier type décrit en référence aux figures 2 et 3, il est également possible d'équiper l'interface d'un convertisseur série/parallèle raccordé au bornier 100 de manière à recevoir des signaux de pilotage en provenance du dispositif de commande et de pilotage 30 sous une forme série.

On conçoit que l'invention qui vient d'être décrite incorporant des moyens de sélection de voies de transmission de signaux permet d'adapter les entrées et les sorties du dispositif d'interfaçage à la nature et au mode de raccordement des dispositifs entre lesquels il est destiné à être raccordé.

En outre, l'interface qui vient d'être décrite incorporant des modules de puissance, le câblage est considérablement simplifié dans la mesure où il n'est pas nécessaire de prévoir des modules externes de puissance pour l'alimentation des appareils électriques, et le raccordement externe des communs correspondant.

On notera également que la composition des éléments de commutation et de sélection est de nature mécanique, par exemple commutateurs, ponts, matrices, et...

Il est ainsi possible de véhiculer de forts courants, pouvant aller jusqu 'à trois ampères, à la différence d'éléments de commutation et de sélection à base de microprocesseurs, et ce sur deux fois huit broches.

On notera enfin que l'invention décrite précédemment présente un encombrement réduit et présente l'avantage de pouvoir être configurée à la main, sans utilisation d'appareils de configuration.

## Revendications

1. Interface d'entrée/sortie comprenant des entrées (E) de raccordement à au moins un premier dispositif (24,26,28;30) et des sorties (S) de raccordement à au moins un deuxième dispositif (30;32,34,36), caractérisée en ce qu'elle comporte des moyens (48;104) de configuration de voies de transmission de signaux électriques entre les entrées (E) et les sorties (S) de l'interface, pour l'adaptation des entrées (E) et/ou des sorties (S) à la nature des dispositifs entre lesquels l'interface est destinée à être raccordée.

2. Interface selon la revendication 1, caractérisée en ce que les entrées et/ou les sorties comportent des broches primaires (E0, E1, E2, E3, E4, E5, E6, E7; S0, S1, S2,S3,S4,S5,S6,S7,S8,S9) de raccordement et des broches secondaires de raccordement (P0,P1,P2,P3,P4,P5,P6,P7), les moyens de configuration comportant un élément de commutation (48;104) interposé entre d'une part au moins une desdites broches secondaires (P0,P1,P2,P3) de raccordement, et, d'autre part, des voies (46e,46f,46g,46h) de transmission de données s'étendant entre les entrées et les sorties et des voies (V0,V1,V2,V3) de transmission de tension d'alimentation, l'élément de commutation (48;104) assurant sélectivement la mise en communication des broches secondaires soit avec les voies (46e,46f,46g,46h) de transmission de données, soit avec les voies (V0,V1,V2,V3) de transmission de tension d'alimentation.

3. Interface selon la revendication 2, caractérisée en ce que ledit au moins un premier dispositif comporte un ensemble d'organes fonctionnels (24,26,28) externes et ledit au moins un deuxième dispositif comporte un dispositif (30) de pilotage du fonctionnement d'appareils électriques (32,34,36) sous le contrôle des organes fonctionnels (24,26,28) externes.

4. Interface selon la revendication 2, caractérisée en ce que ledit au moins un premier dispositif comporte un dispositif (30) de pilotage du fonctionnement d'appareils électriques (32,34,36) et ledit au moins un deuxième dispositif comporte lesdits appareils électriques (32,34,36).

5. Interface selon la revendication 4, caractérisée en ce qu'elle comporte un ensemble de modules de puissance (108) intercalés entre les entrées (E) et les sorties (S), et des moyens (112,114) de sélection de mode d'alimentation d'au moins un des modules de puissance (108) selon un premier mode d'alimentation par voie externe dans lequel lesdits au moins un module de puissance (108) communiquent avec une broche secondaire sur laquelle est appliquée une tension d'alimentation et un deuxième mode d'alimentation par voie interne dans lequel ils communiquent avec un bus interne (110) d'alimentation.

6. Interface selon la revendication 5, caractérisée en ce que les moyens de sélection de mode d'alimentation comportent au moins un deuxième élément de commutation (112,114) interposé entre les broches secondaires et lesdits au moins un module de puissance (108) et commutable à la fermeture pour l'alimentation de ces derniers selon le premier mode d'alimentation et à l'ouverture pour leur alimentation selon le deuxième mode d'alimentation.

7. Interface selon la revendication 6, caractérisée en ce que les moyens de sélection de mode d'alimentation comportent en outre un organe (116) de sélection de tensions d'alimentation desdits au moins un module de puissance (108) comprenant un ensemble de premiers conducteurs connectés entre le deuxième élément de commutation (112) et les modules de puissance (108) et un ensemble de deuxièmes conducteurs raccordés à des premières lignes d'alimentation du bus interne (110) d'alimentation véhiculant des tensions internes d'alimentation à niveau haut et adaptés pour être sélectivement raccordés à chaque premier conducteur de l'organe de sélection (116) en vue de la sélection d'une des lignes d'alimentation pour l'alimentation interne des modules de puissance (108).

8. Interface selon la revendication 7, caractérisée en ce qu'elle comporte un deuxième organe (118) de sélection de tensions d'alimentation comportant un ensemble de premiers conducteurs raccordés aux voies (V0,V1,V2,V3) de transmission de tension d'alimentation et un ensemble de deuxièmes conducteurs raccordés à des deuxièmes lignes d'alimentation du bus interne (110) d'alimentation véhiculant des tensions internes d'alimentation à niveau bas et adaptés pour être sélectivement raccordés à chaque premier conducteur du deuxième organe de sélection (118) en vue de leur mise en communication avec les broches secondaires de raccordement, par l'intermédiaire du premier élément de commutation (104), le deuxième élément de commutation (112) étant interposé entre les zones de connexion des premier (116) et deuxième (118) organes de sélection.

9. Interface selon l'une quelconque des revendications 1 à 8, caractérisée en ce qu'elle comporte en outre un ensemble de diodes électroluminescentes (70) disposées sur chaque voie de transmission de données.

10. Interface selon l'une quelconque des revendications 5 à 9, caractérisée en ce qu'elle comporte en outre, disposé en sortie de chaque module de puissance, un fusible (126) de protection des appareils électriques.

11. Dispositif d'interfaçage pour la mise en communication d'un dispositif de commande (30) avec un ensemble d'appareils électriques (32,34,36) et un ensemble d'organes fonctionnels (24,26,28) externes en vue du pilotage du fonctionnement des appareils sous le contrôle des organes fonctionnels (24,26,28), caractérisé en ce qu'il comporte un ensemble d'interfaces (10) d'entrée/sortie selon l'une quelconque des revendications 1 à 10.

12. Dispositif d'interfaçage selon la revendication 11, caractérisé en ce qu'il comporte des moyens de conversion série/parallèle et/ou des moyens de conversion parallèle/série interposés entre chaque interface (10) d'entrée/sortie et le dispositif de commande (30).
